# EUROPÄISCHE PATENTSCHRIFT

(11) **EP 3 228 826 B1**
(45) Veröffentlichungstag und Bekanntmachung des Hinweises auf die Patenterteilung: **17.03.2021**
(21) Anmeldenummer: 16163779.8
(22) Anmeldetag: 05.04.2016
(51) Int. Cl.: F01D 11/00, F01D 11/12

(54) **DICHTUNGSSEGMENTANORDNUNG MIT STECKVERBINDUNG, ZUGEHÖRIGE GASTURBINE UND HERSTELLUNGSVERFAHREN**
SEAL SEGMENT ARRANGEMENT HAVING A CONNECTOR, CORRESPONDING GAS TURBINE ENGINE AND METHOD OF MANUFACTURING
AGENCEMENT DE SEGMENTS D'ÉTANCHÉITÉ AYANT UN CONNECTEUR, MOTEUR À TURBINE À GAZ ET PROCÉDÉ DE FABRICATION ASSOCIÉ

(43) Veröffentlichungstag der Anmeldung: 11.10.2017
(73) Patentinhaber: MTU Aero Engines AG, 80995 München (DE)
(72) Erfinder: Liebl, Christian, 85461 Bockhorn (DE); Schlothauer, Steffen, 85253 Erdweg (DE); Jakimov, Andreas, 81245 München (DE); Ladewig, Alexander, 83707 Bad Wiessee (DE); Blumenschein, Karl, 85244 Röhrmoos (DE); Kraus, Jürgen, 85221 Dachau (DE)

(56) Entgegenhaltungen:
- EP-A1- 3 109 520
- DE-A1- 10 305 899
- DE-A1-102011 102 598
- DE-A1-102013 219 024
- US-A1- 2005 002 780
- US-A1- 2014 020 403

## Beschreibung

Die vorliegende Erfindung betrifft eine Dichtungssegmentanordnung für eine Turbomaschine, insbesondere eine Industriegasturbine oder Fluggasturbine, umfassend einen ersten Dichtungsträger und einen zweiten Dichtungsträger, die in Umfangsrichtung nebeneinander angeordnet sind, wobei der erste Dichtungsträger eine erste Trägerbasis und wenigstens einen ersten Dichtungskörper aufweist, der mit der ersten Trägerbasis verbunden ist, und wobei der zweite Dichtungsträger eine zweite Trägerbasis und wenigsten einen zweiten Dichtungskörper aufweist, der mit der zweiten Trägerbasis verbunden ist, wobei der erste Dichtungskörper und der zweite Dichtungskörper durch mehrere in Umfangsrichtung und in Axialrichtung nebeneinander, insbesondere regelmäßig angeordnete Hohlräume gebildet sind, wobei sich die Hohlräume von der jeweiligen Trägerbasis aus in radialer Richtung erstecken. Richtungsangaben wie "Axial-" bzw. "axial", "Radial-" bzw. "radial" und "Umfangs-" sind grundsätzlich auf die Maschinenachse der Turbomaschine bzw. Gasturbine bezogen zu verstehen, sofern sich aus dem Kontext nicht explizit oder implizit etwas anderes ergibt. Derartige Dichtungssegmentanordnungen mit wabenförmigen Dichtungskörpern sind bekannt. Üblicherweise werden die wabenförmigen Dichtungskörper auf die Trägerbasis aufgelötet. Der Dichtungsträger weist insbesondere in Umfangsrichtung eine geringe Steifigkeit auf, die durch den wabenförmigen Dichtungskörper kaum verbessert wird, da die Waben selbst in Umfangsrichtung keine besondere Steifigkeit aufweisen. Da der Dichtungsträger samt Dichtungskörper in radialer Richtung möglichst flach ausgebildet sein soll, ergibt sich für das gesamte Bauteil eine geringe Steifigkeit Beispiele solcher Dichtungssegmentanordnungen sind aus US 2005/002780 A1, DE 103 05 899 A1, DE 10 2011 102598 A1 und DE 10 2013 219024 A1 bekannt.

Aufgabe der Erfindung ist es, einen Dichtungsträger bereitzustellen, der die obigen Nachteile verringert oder gar vermeidet.

Zur Lösung dieser Aufgabe wird eine Dichtungssegmentanordnung gemäß Anspruch 1 vorgeschlagen, wobei die erste Trägerbasis und die zweite Trägerbasis in Umfangsrichtung mittels einer Steckverbindungsanordnung miteinander koppelbar oder gekoppelt sind.

Die Steckverbindungsanordnung ermöglicht zum einen das einfache Verbinden des ersten und des zweiten Dichtungsträgers und zum anderen kann durch die Steckverbindung ein Bereich erhöhter Steifigkeit der Dichtungssegmentanordnung geschaffen werden.

Gemäß der Erfindung ist an der ersten Trägerbasis wenigstens ein in Umfangsrichtung vorstehendes Steckelement ausgebildet. Ferner ist an der zweiten Trägerbasis wenigstens eine Steckaufnahme ausgebildet, die dazu eingerichtet ist, das wenigstens eine Steckelement der benachbarten ersten Trägerbasis aufzunehmen. Die Ausgestaltung einer Steckaufnahme und eines Steckelements ist insbesondere so vorgesehen, dass die Steckaufnahme und das Steckelement zueinander komplementär ausgebildet sind. Zwischen dem Steckelement und der Steckaufnahme kann vorzugsweise eine formschlüssige Verbindung hergestellt werden bzw. hergestellt sein.

Gemäß der Erfindung weisen die erste Trägerbasis und die zweite Trägerbasis eine sich entlang der Umfangsrichtung ändernde Höhe in Radialrichtung auf. Dabei kann eine Gesamthöhe in Radialrichtung der jeweiligen Trägerbasis und des jeweiligen Dichtungskörpers im Wesentlichen konstant sein. Durch eine sich ändernde Materialdicke bzw. Höhe der Trägerbasis kann eine verbesserte Steifigkeit des Dichtungsträgers erreicht werden.

Ferner wird vorgeschlagen, dass eine Höhe in Radialrichtung des jeweiligen Dichtungskörpers im Bereich der Steckverbindungsanordnung einen minimalen Wert aufweist. Gemäß der Erfindung, weist die betreffende Trägerbasis im Bereich der Steckverbindung, also im Bereich der Steckaufnahme bzw. benachbart zum Steckelement eine maximale Höhe auf. Hierdurch wird gewährleistet, dass im Bereich der Steckverbindung eine ausreichende Steifigkeit erreicht wird und eine sichere Verbindung zwischen dem ersten und dem zweiten Dichtungsträger ermöglicht ist.

Um die Steifigkeit weiter zu verbessern wird vorgeschlagen, dass an der ersten Trägerbasis und an der zweiten Trägerbasis wenigstens ein Versteifungselement vorgesehen ist, das sich von der jeweiligen Trägerbasis aus in Radialrichtung in den jeweiligen Dichtungskörper hinein erstreckt. Solche Versteifungselemente können an unterschiedlichen Stellen der Trägerbasis vorgesehen sein. Eine Möglichkeit ist, dass sich Versteifungselemente im Wesentlichen entlang der Umfangsrichtung erstrecken. Ferner können die Versteifungselemente auch geneigt zur Umfangsrichtung verlaufen, insbesondere ist es auch denkbar, dass Versteifungselemente sich kreuzen. Sofern ein Versteifungselement ausschließlich in einem Axialrichtungsbereich der Turbomaschine vorgesehen ist, in dem bei einem bestimmungsgemäßen Gebrauch der Turbomaschine kein Anstreifen oder Einlaufen von einem Dichtungsvorsprung einer Rotorkomponente zu erwarten ist, so kann sich das Versteifungselement in Radialrichtung bis zur radial inneren, der Rotorkomponente zugewandten, freien Oberfläche der Dichtungsträgeranordnung erstrecken oder in Sonderfällen sogar darüber hinaus. Andernfalls erstreckt sich das Versteifungselement in Radialrichtung vorzugsweise weniger weit, um sicherzustellen, dass es noch immer von dem Dichtungsvorsprung der Rotorkomponente beabstandet bleibt, selbst wenn dieser bis zu einer maximal vorgesehenen Einlauftiefe in die Dichtungssegmentanordnung eintaucht.

Es ist ferner bevorzugt, dass die Hohlräume des ersten und des zweiten Dichtungskörpers durch untereinander verbundene Streben gebildet sind, wobei die Streben derart angeordnet sind, dass die Hohlräume in einer Draufsicht in Radialrichtung eine vieleckige Form aufweisen, insbesondere wabenförmig oder rautenförmig ausgebildet sind.

Die erste und zweite Trägerbasis, der wenigstens eine erste und zweite Dichtungskörper und die Steckverbindungsanordnung sind vorzugsweise durch ein additives Fertigungsverfahren hergestellt, insbesondere durch selektives Laserschmelzen. Bevorzugt wird auch das wenigstens eine Versteifungselement durch das additive Fertigungsverfahren hergestellt, insbesondere durch selektives Laserschmelzen. Durch ein solches Verfahren können auch komplexere Formen der Trägerbasis und des Dichtungskörpers samt Steckverbindungsanordnung hergestellt werden. Durch ein solches Herstellungsverfahren werden die Dichtungsträger einstückig ausgebildet, was ebenfalls vorteilhaft für die Verbesserung der Steifigkeit ist. Ferner sind additive Herstellungsverfahren bei komplexeren Formen kostengünstiger als herkömmliche Verfahren, bei denen unterschiedliche Bauteile zunächst durch Gussverfahren hergestellt und anschließend miteinander materialschlüssig verbunden werden müssen (Löten, Schweißen o.ä.).

Weiter wird vorgeschlagen, dass die erste und die zweite Trägerbasis, der wenigstens eine erste und zweite Dichtungskörper, die Steckverbindungsanordnung und das wenigstens eine Versteifungselement schichtweise aufgebaut sind, wobei die Schichten vorzugsweise in Axialrichtung (AR) nebeneinander liegen.

Die Erfindung betriff ferner auch eine Gasturbine, insbesondere Fluggasturbine, mit wenigstens einer oben beschriebenen Dichtungssegmentanordnung, wobei die wenigstens eine Dichtungssegmentanordnung einem Leitschaufelkranz zugeordnet ist und wobei der erste und zweite Dichtungskörper radial innen einem drehenden Rotorbauteil, insbesondere einer Welle oder Scheibe eines Laufschaufelkranzes, und daran ausgebildeten Dichtvorsprüngen zugewandt sind.

Durch den Einsatz einer solchen Dichtungssegmentanordnung wird eine erhöhte Steifigkeit erreicht, wodurch beispielsweise auch ein Laufspalt verringert werden kann, der zwischen dem Dichtungskörper und einem gegenüberliegenden Dichtungsvorsprung des Rotorbauteils ausgebildet ist, weil die verbesserte Steifigkeit das Einhalten von geringen Toleranzen unterstützt. Das Verringern des Laufspalts führt zu einer verbesserten Abdichtung und insgesamt auch zu einer Verbesserung des Gesamtwirkungsgrades der Gasturbine.

Schließlich betrifft die Erfindung auch ein additives Verfahren, insbesondere selektives Laserschmelzverfahren, zur Herstellung einer oben beschriebenen Dichtungssegmentanordnung.

Das Verfahren kann dabei wie folgt beschrieben werden. Aufbau eines ersten Dichtungsträgers, umfassend die Schritte
schichtweises Aufbauen der ersten Trägerbasis und des ersten Dichtungskörpers, wobei für den ersten Dichtungskörper miteinander verbundene, insbesondere sich kreuzende Streben zur Bildung des Dichtungskörpers mit Hohlräumen aufgebaut werden;
schichtweises Aufbauen des Steckverbindungselements;
schichtweises Aufbauen von wenigstens einem Versteifungselement;

Aufbau eines zweiten Dichtungsträgers, umfassend die Schritte:
schichtweises Aufbauen des zweiten Dichtungsträgers und des zweiten Dichtungskörpers, wobei für den zweiten Dichtungskörper miteinander verbundene, insbesondere sich kreuzende Streben zur Bildung des Dichtungskörpers mit Hohlräumen aufgebaut werden,
schichtweises Aufbauen der Steckverbindungsaufnahme;
schichtweises Aufbauen von wenigstens einem Versteifungselement;
   wobei der Schichtaufbau für den ersten Dichtungsträger und den zweiten Dichtungsträger bezogen auf einen bestimmungsgemäß verwendeten Dichtungsträger in Axialrichtung oder in Radialrichtung erfolgt. Dabei stellt die oben beschriebene Abfolge der schichtweisen Aufbauschritte nicht zwingend ein zeitliches nacheinander Durchführen dieser Schritte dar. Vielmehr können die oben genannten schichtweisen Aufbauschritte der verschiedenen Komponenten, wie Trägerbasis, Dichtungskörper, Steckverbindungselement, Steckverbindungsaufnahme, Versteifungselement auch quasi parallel bzw. im Wesentlichen zeitgleich erfolgen, insbesondere unter Berücksichtigung welche der Komponenten gerade Teil einer zu erstellenden Schicht ist.

Das Verfahren kann ferner auch einen Schritt umfassen, dass die Streben derart schichtweise aufgebaut werden, dass sie wabenförmige Hohlräume bilden oder sich unter einem Winkel von etwa 90° schneiden bzw. mit der Ebene des Schichtaufbaus einen Winkel von etwa 45° bilden.

Nachfolgend wird die Erfindung unter Bezugnahme auf die anliegenden Figuren beispielhaft und nicht einschränkend beschrieben.
Fig. 1 zeigt in einer vereinfachten und schematischen Längsschnittdarstellung entlang der Umfangsrichtung eine Ausführungsform einer Dichtungssegmentanordnung, etwa entsprechend einer Schnittlinie I-I der Fig. 2.
Fig. 2 zeigt in einer vereinfachten und schematischen Art eine geschnittene Draufsicht aus der Radialrichtung, wobei der Schnitt etwa entsprechend der Schnittlinie II-II der Fig. 1 gewählt ist.
Fig. 3 zeigt eine zur Fig. 1 ähnliche Darstellung einer Dichtungssegmentanordnung; die Schnittansicht entspricht etwa der Schnittlinie III-III der Fig. 4.
Fig. 4 zeigt eine zur Fig. 2 ähnliche Darstellung, wobei andere Ausgestaltungen eines Dichtungskörpers und von Versteifungselementen gezeigt sind; die Schnittansicht entspricht etwa der Schnittlinie IV-IV der Fig. 3.

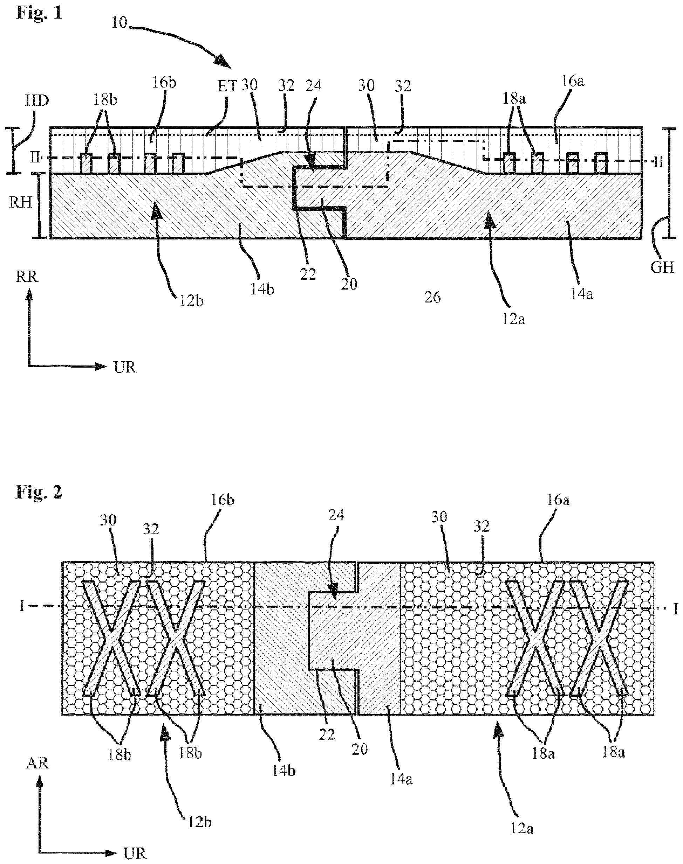

In Fig. 1 ist vereinfacht und schematisch eine Schnittdarstellung einer Dichtungssegmentanordnung 10 gezeigt. Die Schnittebene wird durch die Radialrichtung RR und die Umfangsrichtung UR aufgespannt. Die Dichtungssegmentanordnung 10 weist einen ersten Dichtungsträger 12a und einen zweiten Dichtungsträger 12b auf, die in Umfangsrichtung UR nebeneinander angeordnet sind. Der erste Dichtungsträger 12a umfasst eine erste Trägerbasis 14a und einen an dieser Trägerbasis 14a befestigten ersten Dichtungskörper 16a. In analoger Weise weist der zweite Dichtungsträger 12b eine Trägerbasis 14b und einen Dichtungskörper 16b auf. Ferner sind an beiden Dichtungsträgern 12a, 12b Versteifungselemente 18a, 18b bereitgestellt, die in Radialrichtung RR in den jeweiligen Dichtungskörper 16a, 16b hineinragen und mit der jeweiligen Trägerbasis 14a, 14b verbunden sind.

Der erste Dichtungsträger 14a weist an seinem in Umfangsrichtung dem zweiten Dichtungsträger 12b zugewandten Ende ein vorspringendes Steckelement 20 auf. Das Steckelement 20 ist einstückig mit der Trägerbasis 14a ausgebildet. Der zweite Dichtungsträger 12b weist an seinem in Umfangsrichtung dem ersten Dichtungsträger 12a zugewandten Ende eine Steckaufnahme 22 auf, in das Steckelement 20 des ersten Dichtungsträgers 12a aufnehmbar ist bzw. aufgenommen ist. Das Steckelement 20 und die Steckaufnahme 22 bilden zusammen eine Steckanordnung 24 der Dichtungssegmentanordnung 10.

Die Steckanordnung ist hier rein schematisch und vereinfacht dargestellt, wobei das Steckelement 20 quaderförmig ausgebildet ist. Diese Ausgestaltung ist allerdings rein beispielhaft. Denkbar sind auch andere Formen des Steckelements, etwa mit gekrümmten Abschnitten, anderen vieleckigen Formen oder auch Kombinationen aus eckigen und gekrümmten Formen. Die Steckaufnahme 22 ist zum Steckelement 20 bevorzugt komplementär ausgebildet, so dass zwischen dem Steckelement 20 und der Steckaufnahme 22 eine formschlüssige Verbindung ermöglicht wird.

Die jeweilige Trägerbasis 14a, 14b weist bezogen auf eine in Fig. 1 radial außen liegende Bezugsseite 26 eine sich entlang der Umfangsrichtung UR ändernde radial Höhe RH auf. Die radiale Höhe kann auch als Dicke der Trägerbasis 14a, 14b bezeichnet werden. Wie aus der Figur 1 ersichtlich ist eine radiale Gesamthöhe GH eines Dichtungsträgers 12a, 12b bzw. der Dichtungssegmentanordnung 10 im Wesentlichen gleich über die gesamte Erstreckung in Umfangsrichtung UR. Eine zunehmende Höhe RH der Trägerbasis 14a, 14b wird durch eine Verringerung der Höhe HD des betreffenden Dichtungskörpers 18a, 18b kompensiert. Dabei ist zu beachten, dass der Dichtungskörper 16a, 16b in Radialrichtung RR nicht beliebig schmal ausgeführt werden kann. Die Höhe HD des Dichtungskörpers 16a, 16b muss größer sein als eine mögliche maximale Einlauftiefe ET. Dabei bezeichnet die Einlauftiefe ET den Bereich des Dichtungskörpers 16a, 16b, der von einem Dichtungsvorsprung einer nicht dargestellten Rotorkomponente einer Gasturbine im Betrieb abgetragen werden kann. Wie aus der Fig. 1 ersichtlich, weisen die Trägerbasen 14a, 14b im Bereich der Steckverbindungsanordnung 24 eine größte Höhe auf. Dies ermöglicht das Vorsehen der Steckaufnahme 22 und führt im Bereich der Steckverbindung zu einer verbesserten Steifigkeit.

Der Dichtungskörper 16a, 16b umfasst, wie dies auch aus der Schnittdarstellung gemäß Fig. 2 ersichtlich ist, mehrere in Umfangsrichtung und Axialrichtung nebeneinander angeordnete Hohlräume 30, die von Streben 32 begrenzt werden. Die Hohlräume 30 erstrecken sich im Wesentlichen in Radialrichtung RR. Im Beispiel der Fig. 2 sind die Hohlräume 30 wabenförmig ausgebildet. Aus der Fig. 2 ist ferner ersichtlich, dass jeweils zwei Versteifungselemente 18a, 18b gekreuzt angeordnet sind, so dass sie gemeinsam eine x-förmige Versteifung bilden. In jedem Dichtungsträger 12a, 12b sind jeweils zwei gekreuzte bzw. x-förmige Versteifungen vorgesehen.

Die Versteifungselemente 18a, 18b sind somit in Radialrichtung RR vorstehende Rippen, die dazu führen, dass die Steifigkeit der Trägerbasis 14a, 14b bzw. des jeweiligen Dichtungsträgers 12a, 12b verbesserte werden kann, wobei insbesondere die Steifigkeit in Umfangsrichtung UR verbessert wird.

Die Trägerbasis 12a, 12b der Dichtungskörper 16a, 16b und die Versteifungselemente 18a, 18b sind vorzugsweise einstückig bzw. integral miteinander ausgebildet. Besonders bevorzugt sind sie mittels eines additiven Herstellungsverfahrens, wie beispielsweise selektivem Laserschmelzen hergestellt. Beim ersten Dichtungsträger 12a ist auch das Steckelement 20 einstückig mit dem Rest des Dichtungsträgers 12a verbunden. Beim zweiten Dichtungsträger 12b ist die Steckaufnahme in der einstückig ausgebildeten Trägerbasis 14b ausgespart. Das einstückige bzw. integrale Ausgestalten der Dichtungsträger 12a, 12b ermöglicht insbesondere durch den Einsatz von additiven Herstellungsverfahren, wie dem selektiven Laserschmelzen, das Herstellen von komplexeren Formen der Trägerbasis 14a, 14b, der Versteifungselemente 18a, 18b und der Dichtungskörper 16a, 16b. Es ist hierdurch auch möglich, im Bereich des Dichtungskörpers 16a, 16b die Versteifungselemente 18a, 18b vorzusehen, was durch die bisherigen Verfahren (Anlöten des Dichtungskörpers auf der Trägerbasis) nicht möglich war.

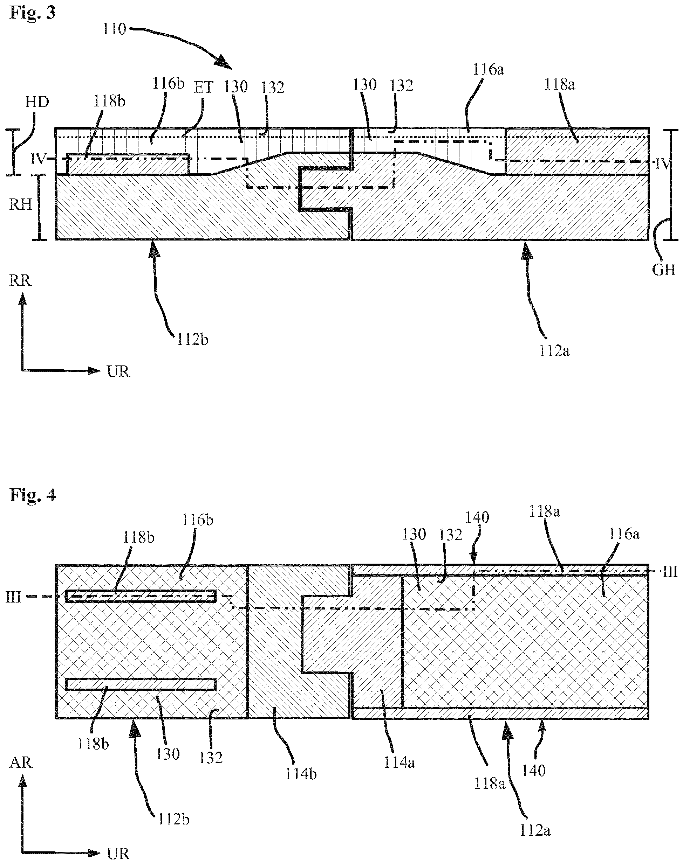

Fig. 3 und 4 zeigen in zu den Fig. 1 und 2 analogen Darstellungen eine Ausführungsform eines Dichtungsträgers 110, bei der die Hohlkörper 130 der Dichtungskörper 116a, 116b rautenförmig ausgebildet sind. Das Vorsehen sich kreuzenden Streben 132 erhöht ebenfalls die Steifigkeit des Dichtungskörpers 116a, 116b in Umfangsrichtung UR.

Ferner sind in Fig. 3 beim ersten Dichtungsträger 112a zwei erste Versteifungselemente 118a vorgesehen, die sich entlang der Umfangsrichtung erstrecken und an axialen Endbereichen 140 des ersten Dichtungsträgeres 112a vorgesehen sind. Dabei ist der erste Dichtungskörper 116a in Axialrichtung AR zwischen den beiden ersten Versteifungselementen 118a aufgenommen. Bevorzugt weisen die ersten Versteifungselemente 118a im Wesentlichen die gleiche Höhe HD auf wie der erste Dichtungskörper 116a, so dass sie den Dichtungskörper 116a abdecken, was insbesondere aus der Fig. 3 rechts ersichtlich ist. Durch die Anordnung des ersten Dichtungskörpers 116a in Axialrichtung zwischen den Versteifungselementen 118a wird sichergestellt, dass der Dichtungsvorsprung einer nicht dargestellten Rotorkomponente der Turbomaschine bzw. Gasturbine ausschließlich im Falle eines Anstreifens oder Einlaufens mit dem ersten Dichtungskörper 116a und nicht mit den Versteifungselementen 118a in Kontakt geraten könnte.

Beim zweiten Dichtungsträger 112b (linke Seite der Fig. 3 und 4) sind zwei zweite Versteifungselemente 118b vorgesehen, die sich in Umfangsrichtung UR erstecken. Diese beiden zweiten Versteifungselemente 118b sind beispielhaft wieder mit einer geringeren Höhe ausgeführt als der zweite Dichtungskörper 116b. Entsprechend sind die zweiten Versteifungselemente 118b von außen nicht sichtbar, sondern integral im zweiten Dichtungskörper 116b aufgenommen bzw. ausgebildet.

Die in Bezug auf die Figuren 3 und 4 vorgestellten Versteifungselemente 118a, 118b sind beispielhafte Ausgestaltungen. Selbstverständlich können die Versteifungselemente 118a, 118b auch andere Formen aufweisen oder sich in andere (Haupt-)Richtungen erstrecken. Die Versteifungselemente 118a, 118b lassen sich selbstverständlich auch mit einem wabenförmigen Dichtungskörper 16a, 16b (Fig. 1) kombinieren. Ferner sind auch die Versteifungselemente 18a, 18 (Fig. 1) mit dem Dichtungskörper 116a, 116b mit den rautenförmigen Hohlräumen 130 kombinierbar. Weitere für die Figuren 3 und 4 nicht beschriebene Teile oder Merkmale des Dichtungsträgers 110 sind analog wie in der ersten Ausführungsform der Fig. 1 und 2 und es wird diesbezüglich auf die dortige Beschreibung verwiesen. Auch der Dichtungsträger 110 ist bevorzugt mittels eines additiven Herstellungsverfahrens, wie beispielsweise selektivem Laserschmelzen hergestellt. Es wird ferner darauf hingewiesen, dass bei einer Dichtungssegmentanordnung 110 in der Regel eine Art von Versteifungselementen 118a, 118b für den ersten Dichtungsträge 114a und den zweiten Dichtungsträger 114b verwendet wird. Die in den Fig. 3 und 4 dargestellten unterschiedlichen Versteifungselemente 118a und 118b sind rein exemplarisch in der gleichen Dichtungssegmentanordnung 110 dargestellt.

### Bezugszeichenliste

- 10, 110: Dichtungssegmentanordnung
- 12a, 12b, 112a, 112b: erster/zweiter Dichtungsträger
- 14a, 14b, 114a, 114b: erste/zweite Trägerbasis
- 16a, 16b, 116a, 116b: erster/zweiter Dichtungskörper
- 18a, 18b, 118a, 118b: Versteifungselemente
- 20: Steckelement
- 22: Steckaufnahme
- 24: Steckanordnung
- 26: Bezugsseite
- 30, 130: Hohlraum
- 32, 132: Strebe
- 140: Endbereich
- AR: Axialrichtung
- ET: Einlauftiefe
- GH: Gesamthöhe Dichtungsträger
- HD: Höhe Dichtungskörper
- RH: Höhe Trägerbasis
- RR: Radialrichtung
- UR: Umfangsrichtung

## Patentansprüche

1. Dichtungssegmentanordnung (10; 110) für eine Turbomaschine, insbesondere eine Gasturbine, umfassend einen ersten Dichtungsträger (12a, 112a) und einen zweiten Dichtungsträger (12b; 112b), die in Umfangsrichtung (UR) nebeneinander angeordnet sind, wobei der erste Dichtungsträger (12a; 112a) eine erste Trägerbasis (14a; 114a) und wenigstens einen ersten Dichtungskörper (16a, 116a) aufweist, der mit der ersten Trägerbasis (14a; 114a) verbunden ist, und wobei der zweite Dichtungsträger (12b; 112b) eine zweite Trägerbasis (14b; 114b) und wenigsten einen zweiten Dichtungskörper (16b, 116b) aufweist, der mit der zweiten Trägerbasis (14b; 114b) verbunden ist, wobei der wenigstens eine erste Dichtungskörper (16a; 116a) und der wenigstens eine zweite Dichtungskörper (16b; 116b) durch mehrere in Umfangsrichtung (UR) und in Axialrichtung (AR) nebeneinander, insbesondere regelmäßig angeordnete Hohlräume (30; 130) gebildet sind, wobei sich die Hohlräume (30; 130) von der jeweiligen Trägerbasis (14a, 14b; 114a, 114b) aus in radialer Richtung (RR) erstrecken, wobei
die erste Trägerbasis (14a; 114a) und die zweite Trägerbasis (14b; 114b) in Umfangsrichtung (UR) mittels einer Steckverbindungsanordnung (24) miteinander koppelbar oder gekoppelt sind,
an der ersten Trägerbasis (14a; 114a) wenigstens ein in Umfangsrichtung (UR) vorstehendes Steckelement (20) ausgebildet ist,
an der zweiten Trägerbasis (14b; 114b) wenigstens eine Steckaufnahme (22) ausgebildet ist, die dazu eingerichtet ist, das wenigstens eine Steckelement (20) der benachbarten ersten Trägerbasis (14a; 114a) aufzunehmen wobei das Steckelement (20) und die Steckaufnahme (22) zusammen die Steckverbindungsanordnung (24) bilden,
**dadurch gekennzeichnet, dass** die erste Trägerbasis (14a; 114a) und die zweite Trägerbasis (14b; 114b) eine sich entlang der Umfangsrichtung (UR) ändernde Höhe (RH) in Radialrichtung (RR) aufweisen, wobei die Höhe (RH) im Bereich der Steckverbindungsanordnung (24) am größten ist, und
dass die erste Trägerbasis (14a; 114a), der wenigstens eine erste Dichtungskörper (16a; 116a) und das Steckelement (20) einstückig ausgebildet und durch ein additives Fertigungsverfahren hergestellt sind, und
dass die zweite Trägerbasis (14b; 114b), der wenigstens eine zweite Dichtungskörper (16b; 116b) und die Steckaufnahme (22) einstückig ausgebildet und durch ein additives Fertigungsverfahren hergestellt sind.

2. Dichtungssegmentanordnung nach Anspruch 1, **dadurch gekennzeichnet, dass** eine Gesamthöhe (GH) in Radialrichtung (RR) der jeweiligen Trägerbasis (14a, 14b; 114a, 114b) und des jeweiligen Dichtungskörpers (16a, 16b) im Wesentlichen konstant ist.

3. Dichtungssegmentanordnung nach Anspruch 1 oder 2, **dadurch gekennzeichnet, dass** eine Höhe (HD) in Radialrichtung (RR) des jeweiligen Dichtungskörpers (16a, 16b) im Bereich der Steckverbindungsanordnung (24) einen minimalen Wert aufweist.

4. Dichtungssegmentanordnung nach einem der vorhergehenden Ansprüche, **dadurch gekennzeichnet, dass** an der ersten Trägerbasis (14a; 114a) und an der zweiten Trägerbasis (14b) wenigstens ein Versteifungselement (18a, 18b; 118a, 118b) vorgesehen ist, das sich von der jeweiligen Trägerbasis (14a, 14b; 114a, 114b) aus in Radialrichtung (RR) in den jeweiligen Dichtungskörper (16a, 16b; 116a, 116b) hinein erstreckt.

5. Dichtungssegmentanordnung nach einem der vorhergehenden Ansprüche, **dadurch gekennzeichnet, dass** die Hohlräume des wenigstens einen ersten und des wenigstens einen zweiten Dichtungskörpers (18) durch untereinander verbundene Streben gebildet sind, wobei die Streben derart angeordnet sind, dass die Hohlräume in einer Draufsicht in Radialrichtung (RR) eine vieleckige Form aufweisen, insbesondere wabenförmig oder rautenförmig ausgebildet sind.

6. Dichtungssegmentanordnung nach einem der vorhergehenden Ansprüche, **dadurch gekennzeichnet, dass** die erste und zweite Trägerbasis (14a, 14b; 114a, 114b), der wenigstens eine erste und zweite Dichtungskörper (16a, 16b; 116a, 116b) und die Steckverbindungsanordnung (24) durch selektives Laserschmelzen hergestellt sind.

7. Dichtungssegmentanordnung nach Anspruch 4, **dadurch gekennzeichnet, dass** das wenigstens eine Versteifungselement (18a, 18b; 118a, 118b) durch das additive Fertigungsverfahren hergestellt ist, insbesondere durch selektives Laserschmelzen.

8. Dichtungssegmentanordnung nach Anspruch 7, **dadurch gekennzeichnet, dass** die erste und die zweite Trägerbasis (14a, 14b; 114a, 114b), der wenigstens eine erste und zweite Dichtungskörper (16a, 16b; 116a, 116b), die Steckverbindungsanordnung (24) und das wenigstens eine Versteifungselement (18a, 18b; 118a, 118b) schichtweise aufgebaut sind, wobei die Schichten vorzugsweise in Axialrichtung (AR) nebeneinander liegen.

9. Gasturbine, insbesondere Fluggasturbine**,** mit wenigstens einer Dichtungssegmentanordnung (10; 110) nach einem der vorhergehenden Ansprüche, **dadurch gekennzeichnet, dass** die wenigstens eine Dichtungssegmentanordnung (10; 110) einem Leitschaufelkranz zugeordnet ist und dass der wenigstens eine erste und zweite Dichtungskörper (16a, 16b; 116a, 116b) radial innen einem drehenden Rotorbauteil, insbesondere einer Welle oder Scheibe eines Laufschaufelkranzes, und daran ausgebildeten Dichtvorsprüngen zugewandt sind.

10. Additives Verfahren, insbesondere selektives Laserschmelzverfahren, zur Herstellung einer Dichtungssegmentanordnung nach einem der Ansprüche 1 bis 8.

## Claims

1. Sealing segment assembly (10; 110) for a turbomachine, in particular a gas turbine, comprising a first sealing support (12a, 112a) and a second sealing support (12b; 112b) which are arranged next to one another in the circumferential direction (UR), the first sealing support (12a; 112a) having a first support base (14a; 114a) and at least one first sealing body (16a, 116a) which is connected to the first support base (14a; 114a), and the second sealing support (12b; 112b) having a second support base (14b; 114b) and at least one second sealing body (16b, 116b) which is connected to the second support base (14b; 114b), the at least one first sealing body (16a; 116a) and the at least one second sealing body (16b; 116b) being formed by a plurality of cavities (30; 130) which are arranged next to one another, in particular regularly, in the circumferential direction (UR) and in the axial direction (AR), the cavities (30; 130) extending from the relevant support base (14a, 14b; 114a, 114b) in the radial direction (RR), the first support base (14a; 114a) and the second support base (14b; 114b) being couplable or coupled to one another in the circumferential direction (UR) by means of a plug-in connection assembly (24), at least one plug-in element (20) which protrudes in the circumferential direction (UR) being formed on the first support base (14a; 114a), at least one socket (22) being formed on the second support base (14b; 114b), which socket is designed to receive the at least one plug-in element (20) of the adjacent first support base (14a; 114a), the plug -in element (20) and the socket (22) together forming the plug-in connection assembly (24), **characterized in that** the first support base (14a; 114a) and the second support base (14b; 114b) have a height (RH) in the radial direction (RR) which changes in the circumferential direction (UR), the height (RH) being greatest in the region of the plug-in connection assembly (24), and **in that** the first support base (14a; 114a), the at least one first sealing body (16a; 116a) and the plug-in element (20) are formed in one piece and produced by an additive manufacturing process, and **in that** the second support base (14b; 114b), the at least one second sealing body (16b; 116b) and the socket (22) are formed in one piece and produced by an additive manufacturing process.

2. Sealing segment assembly according to claim 1, **characterized in that** an overall height (GH) in the radial direction (RR) of each support base (14a, 14b; 114a, 114b) and of each sealing body (16a, 16b) is substantially constant.

3. Sealing segment assembly according to either claim 1 or claim 2, **characterized in that** a height (HD) in the radial direction (RR) of each sealing body (16a, 16b) has a minimal value in the region of the plug-in connection assembly (24).

4. Sealing segment assembly according to any of the preceding claims, **characterized in that** at least one stiffening element (18a, 18b; 118a, 118b) is provided on the first support base (14a; 114a) and on the second support base (14b), which element extends from the relevant support base (14a, 14b; 114a, 114b) in the radial direction (RR) into the relevant sealing body (16a, 16b; 116a, 116b).

5. Sealing segment assembly according to any of the preceding claims, **characterized in that** the cavities in the at least one first and the at least one second sealing body (18) are formed by interconnected struts, the struts being arranged such that the cavities, in a plan view, have a polygonal shape, in particular are honeycomb-shaped or diamond-shaped, in the radial direction (RR).

6. Sealing segment assembly according to any of the preceding claims, **characterized in that** the first and second support base (14a, 14b; 114a, 114b), the at least one first and second sealing body (16a, 16b; 116a, 116b) and the plug-in connection assembly (24) are produced by selective laser melting.

7. Sealing segment assembly according to claim 4, **characterized in that** the at least one stiffening element (18a, 18b; 118a, 118b) is produced by the additive manufacturing process, in particular by selective laser melting.

8. Sealing segment assembly according to claim 7, **characterized in that** the first and the second support base (14a, 14b; 114a, 114b), the at least one first and second sealing body (16a, 16b; 116a, 116b), the plug-in connection assembly (24) and the at least one stiffening element (18a, 18b; 118a, 118b) are structured in layers, the layers preferably being next to one another in the axial direction (AR).

9. Gas turbine, in particular an aircraft gas turbine, comprising at least one sealing segment assembly (10; 110) according to any of the preceding claims, **characterized in that** the at least one sealing segment assembly (10; 110) is associated with a guide vane ring and **in that** the at least one first and second sealing body (16a, 16b; 116a, 116b) radially inwardly face a rotating rotor component, in particular a shaft or disk of a rotor blade ring, and sealing projections formed thereon.

10. Additive process, in particular a selective laser melting process, for producing a sealing segment assembly according to any of claims 1 to 8.

## Revendications

1. Agencement de segments d'étanchéité (10 ; 110) pour une turbomachine, en particulier une turbine à gaz, comprenant un premier support d'étanchéité (12a, 112a) et un second support d'étanchéité (12b ; 112b) qui sont disposés côte à côte dans la direction circonférentielle (UR), le premier support d'étanchéité (12a ; 112a) comprenant une première base de support (14a ; 114a) et au moins un premier corps d'étanchéité (16a, 116a) relié à la première base de support (14a ; 114a), et le second support d'étanchéité (12b ; 112b) comprenant une seconde base de support (14b ; 114b) et au moins un second corps d'étanchéité (16b ; 116b) relié à la seconde base de support (14b ; 114b), l'au moins un premier corps d'étanchéité (16a ; 116a) et l'au moins un second corps d'étanchéité (16b ; 116b) étant formés par plusieurs cavités (30 ; 130) disposées côte à côte, en particulier régulièrement, dans la direction circonférentielle (UR) et dans la direction axiale (AR), les cavités (30 ; 130) s'étendant à partir de la base de support (14a, 14b ; 114a, 114b) respective dans la direction radiale (RR), la première base de support (14a ; 114a) et la seconde base de support (14b ; 114b) pouvant être accouplées ou étant accouplées dans la direction circonférentielle (UR) au moyen d'un agencement de connecteur (24), au moins un élément de connecteur (20) qui fait saillie dans la direction circonférentielle (UR) étant réalisé au niveau de la première base de support (14a ; 114a), au moins un logement de connecteur (22) étant réalisé au niveau de la seconde base de support (14b ; 114b), lequel au moins un logement de connecteur est conçu pour recevoir l'au moins un élément de connecteur (20) de la première base de support (14a ; 114a) adjacente, l'élément de connecteur (20) et le logement de connecteur (22) formant conjointement l'agencement de connecteur (24),
**caractérisé en ce que** la première base de support (14a ; 114a) et la seconde base de support (14b ; 114b) présentent une hauteur(RH) variant le long de la direction circonférentielle (UR) dans la direction radiale (RR), la hauteur (RH) étant la plus élevée dans la zone de l'agencement de connecteur (24), et
**en ce que** la première base de support (14a ; 114a), l'au moins un premier corps d'étanchéité (16a ; 116a) et l'élément de connecteur(20) sont réalisés d'un seul tenant et fabriqués par un procédé de fabrication additive, et
**en ce que** la seconde base de support (14b ; 114b), l'au moins un second corps d'étanchéité (16b ; 116b) et le logement de connecteur (22) sont réalisés d'un seul tenant et fabriqués par un procédé de fabrication additive.

2. Agencement de segments d'étanchéité selon la revendication 1, **caractérisé en ce qu'**une hauteur totale (GH) dans la direction radiale (RR) de la base de support (14a, 14b ; 114a, 114b) respective et du corps d'étanchéité (16a, 16b) respectif est sensiblement constante.

3. Agencement de segments d'étanchéité selon la revendication 1 ou 2, **caractérisé en ce qu'**une hauteur (HD) dans la direction radiale (RR) du corps d'étanchéité (16a, 16b) respectif présente une valeur minimale dans la zone de l'agencement de connecteur (24).

4. Agencement de segments d'étanchéité selon l'une des revendications précédentes, **caractérisé en ce qu'**au moins un élément de raidissement (18a, 18b ; 118a, 118b) est prévu au niveau de la première base de support (14a ; 114a) et au niveau de la seconde base de support (14b), lequel au moins un élément de raidissement s'étend depuis la base de support (14a, 14b ; 114a, 114b) respective dans la direction radiale (RR) dans le corps d'étanchéité (16a, 16b ; 116a, 116b) respectif.

5. Agencement de segments d'étanchéité selon l'une des revendications précédentes, **caractérisé en ce que** les cavités de l'au moins un premier et de l'au moins un second corps d'étanchéité (18) sont formées par des entretoises reliées entre elles, les entretoises étant disposées de telle manière que les cavités présentent une forme polygonale, en particulier une forme en nid d'abeille ou en losange, dans une vue en plan dans la direction radiale (RR).

6. Agencement de segments d'étanchéité selon l'une des revendications précédentes, **caractérisé en ce que** la première et la seconde base de support (14a, 14b ; 114a, 114b), l'au moins un premier et l'au moins un second corps d'étanchéité (16a, 16b ; 116a, 116b) et l'agencement de connecteur (24) sont fabriqués par fusion sélective au laser.

7. Agencement de segments d'étanchéité selon la revendication 4, **caractérisé en ce que** l'au moins un élément de raidissement (18a, 18b ; 118a, 118b) est fabriqué par le procédé de fabrication additive, en particulier par fusion sélective au laser.

8. Agencement de segments d'étanchéité selon la revendication 7, **caractérisé en ce que** la première et la seconde base de support (14a, 14b ; 114a, 114b), l'au moins un premier et l'au moins un second corps d'étanchéité (16a, 16b ; 116a, 116b), l'agencement de connecteur (24) et l'au moins un élément de raidissement (18a, 18b ; 118a, 118b) sont réalisés parcouches, les couches étant de préférence juxtaposées dans la direction axiale (AR).

9. Turbine à gaz, en particulier turbine à gaz d'aéronef, comportant au moins un agencement de segments d'étanchéité (10 ; 110) selon l'une des revendications précédentes, **caractérisé en ce que** l'au moins un agencement de segments d'étanchéité (10 ; 110) est associé à une couronne d'aubes directrices et **en ce que** l'au moins un premier et l'au moins un second corps d'étanchéité (16a, 16b ; 116a, 116b) sont orientés radialement vers l'intérieur d'un composant de rotor en rotation, en particulier d'un arbre ou d'un disque d'une couronne d'aubes mobiles, et de saillies d'étanchéité réalisées sur celui-ci.

10. Procédé additif, en particulier procédé de fusion sélective au laser, destiné à la fabrication d'un agencement de segments d'étanchéité selon l'une des revendications 1 à 8.
